# EUROPÄISCHE PATENTANMELDUNG

(11) **EP 4 506 719 A1**
(43) Veröffentlichungstag der Anmeldung: **12.02.2025**
(21) Anmeldenummer: 24168031.3
(22) Anmeldetag: 02.04.2024
(51) Int. Cl.: G01S 7/40, G01S 7/497, G01S 7/51, G01S 7/52, G01V 8/10

(54) **SENSOR**

(30) Priorität: 10.08.2023 DE 202023104529 U
(71) Anmelder: Leuze electronic GmbH + Co KG, 73277 Owen/Teck (DE)
(72) Erfinder: Frey, Manuel, 89150 Laichingen (DE); Gröner, Sven, 73230 Kirchheim unter Teck (DE)
(74) Vertreter: Ruckh, Rainer Gerhard

(57) **Zusammenfassung**

Die Erfindung betrifft einen Sensor zur Detektion von Objekten (14) in einem Detektionsbereich (13), mit Sensorkomponenten und einer Auswerteeinheit (6). In einem Arbeitsmodus werden mittels der Sensorkomponenten generierte Sensorsignale in der Auswerteeinheit (6) ausgewertet und abhängig von der Auswertung wird ein Objektfeststellungssignal generiert. Der Sensor ist in einen Testmodus versetzbar. Im Testmodus wird ein im Detektionsbereich (13) platziertes Objekt (14) detektiert. In der Auswerteeinheit (6) werden abhängig von der Detektion dieses Objekts (14) Parameter von Sensorkomponenten und/oder der Auswerteeinheit (6) überprüft und/oder variiert und abhängig hiervon wird eine Ausgabegröße generiert, die mittels einer Anzeigeeinheit (10) angezeigt wird.

## Beschreibung

Die Erfindung betrifft einen Sensor gemäß dem Oberbegriff des Anspruchs 1.

Der Sensor dient generell zur Erfassung von Objekten in einem Detektionsbereich. Hierzu weist der Sensor Sensorsignale generierende Sensorkomponenten und eine Auswerteeinheit auf, in welcher abhängig von Sensorsignalen von Sensorkomponenten ein Objektfeststellungssignal generiert wird.

Die Generierung des Objektfeststellungssignals erfolgt dann, wenn sich der Sensor in einem Arbeitsmodus befindet.

Der Senor kann insbesondere als optischer Sensor ausgebildet sein. Dieser optische Sensor weist als Sensorkomponenten wenigstens einen Lichtstrahlen emittierenden Sender und einen Lichtstrahlen empfangenden Empfänger auf. Zur Generierung des Objektfeststellungssignals wertet die Auswerteeinheit am Empfänger generierte Empfangssignale aus.

Aufgrund von Alterungen von Bauteilen oder Verschmutzungen von Komponenten des Sensors kann dessen Funktionsfähigkeit beeinträchtigt sein. Damit wird auch die Zuverlässigkeit der durchgeführten Objektdetektionen beeinträchtigt. Insbesondere kann es zu Fehldetektionen kommen, was zu gefährlichen Situationen führen kann.

Der Erfindung liegt die Aufgabe zugrunde einen Sensor der eingangs genannten Art bereitzustellen, der eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sensor zur Detektion von Objekten in einem Detektionsbereich, mit Sensorkomponenten und einer Auswerteeinheit. In einem Arbeitsmodus werden mittels der Sensorkomponenten generierte Sensorsignale in der Auswerteeinheit ausgewertet und abhängig von der Auswertung ein Objektfeststellungssignal generiert. Der Sensor ist in einen Testmodus versetzbar und detektiert ein im Detektionsbereich platziertes Objekt. In der Auswerteeinheit werden abhängig von der Detektion dieses Objekts Parameter von Sensorkomponenten und/oder der Auswerteeinheit überprüft und/oder variiert. Abhängig hiervon wird eine Ausgabegröße generiert und mittels einer Anzeigeeinheit angezeigt.

Erfindungsgemäß kann der Sensor in einen vom Arbeitsmodus unabhängigen Testmodus versetzt werden.

In diesem Testmodus wird die Funktionsfähigkeit des Sensors, insbesondere dessen Funktionssicherheit, d.h. die Zuverlässigkeit bei den durchzuführenden Objektdetektionen, überprüft.

Ein wesentlicher Aspekt der Erfindung besteht weiterhin darin, dass im Testmodus bei festgestellter verminderter Funktionssicherheit des Sensors selbsttätig Maßnahmen durchgeführt werden können um die Funktionssicherheit zu erhöhen.

Der Zustand der ermittelten Funktionssicherheit bzw. der verbesserten Funktionssicherheit wird einem Benutzer dadurch angezeigt, dass an einer Anzeigeeinheit eine entsprechende Ausgabegröße ausgegeben wird.

Durch die Anzeige der Ausgabegröße ist der Benutzer über den aktuellen Status informiert. Zeigt die Ausgabegröße eine verminderte Funktionssicherheit an, kann der Benutzer geeignete Gegenmaßnahmen einleiten, wie z.B. eine Reparatur oder einen Austausch des Sensors.

Da im Sensor selbst während des Testmodus selbsttätig Maßnahmen zur Erhöhung der Funktionssicherheit durchgeführt werden, kann der Sensor über einen verlängerten Zeitraum ohne nennenswerte Funktionsbeeinträchtigungen weiter betrieben werden.

Erfindungsgemäß wird zur Durchführung der Funktionsprüfung des Sensors im Detektionsbereich ein Objekt platziert. Prinzipiell kann es sich hierbei um ein bereits im Detektionsbereich befindliches, stationär angeordnetes Objekt handeln. Vorteilhaft wird ein speziell für den Testmodus vorgesehenes Objekt im Detektionsbereich platziert.

Vorteilhaft weist das Objekt definierte, im Sensor bekannte Objekteigenschaften auf.

Zu den Objekteigenschaften gehören insbesondere Geometrie, Größe und Materialbeschaffenheit des Objekts. Auch die Distanz des Objekts zum Sensor kann spezifisch vorgegeben werden.

Die Funktionsüberprüfung des Sensors erfolgt erfindungsgemäß derart, dass abhängig von der Detektion des Objekts im Detektionsbereich im Sensor Parameter von Sensorkomponenten und/oder der Auswerteeinheit überprüft werden, wobei in Abhängigkeit dieser Überprüfung die Ausgabegröße generiert wird. Weiterhin können die Parameter nicht nur überprüft, sondern zur Erhöhung der Funktionssicherheit variiert werden. Insbesondere wird die Ausgabegröße durch Variation der Parameter optimiert.

Vorteilhaft erfolgt die Optimierung der Ausgangsgröße mittels eines in der Auswerteeinheit implementierten Regelalgorithmus.

Der in der Auswerteeinheit implementierte Regelalgorithmus wird im Arbeitsmodus zur Generierung des Objektfeststellungssignals verwendet und kann im Testmodus auch zur Optimierung der Ausgabegröße genutzt werden.

Vorteilhaft sind die zu variierenden Parameter von der Intensität emittierter Strahlung, einer Modulationsfrequenz emittierter Strahlung, einer Verstärkung empfangsseitig registrierter Sensorsignale, einer Auswerterate der Auswertung empfangsseitig registrierter Sensorsignale und/oder einer Signalverarbeitung empfangsseitig registrierter Sensorsignale gebildet.

Einerseits kann durch eine Bestimmung dieser Parameter eine Information über die Funktionssicherheit des Sensors erhalten werden. Andererseits kann dadurch die Variation dieser Parameter die Ausgabegröße optimiert und dadurch die Funktionssicherheit des Sensors erhöht werden.

Prinzipiell kann die Ausgabegröße vom Signal-Rausch-Verhältnis empfangsseitiger Sensorsignale gebildet sein.

Das Signal-Rausch-Verhältnis kann einerseits durch die Sendeleistung oder auch die Art der Verstärkung und/oder Bearbeitung empfangener Sensorsignale verbessert werden. Beispielsweise kann das Signal-Rausch-Verhältnis durch eine Mittelwertbildung empfangener Sensorsignale verbessert werden.

Weiterhin kann die Ausgabegröße von einer Reaktionszeit der Generierung des Objektfeststellungssignals gebildet sein.

Die Reaktionszeit kann beispielsweise dadurch variiert werden, ob und wenn ja, in welchem Umfang eine Mittelwertbildung empfangener Sensorsignale durchgeführt wird.

Besonders vorteilhaft ist die Ausgabegröße von der Signalstärke empfangsseitiger Sensorsignale gebildet.

Bei einer Alterung von Bauelementen oder bei Verschmutzungen von Komponenten des Sensors kann die Signalstärke der empfangenen Sensorsignale reduziert sein, wodurch die Zuverlässigkeit von Objektdetektionen im Arbeitsmodus reduziert sein kann.

Diese Beeinträchtigung kann im Testmodus festgestellt werden und durch Anzeigen der Ausgabegröße mittels der Anzeigeeinheit einem Benutzer signalisiert werden.

Weiterhin kann im Testmodus durch Variation geeigneter Parameter, wie der Sendeleistung oder der Auswertung und/oder Verstärkung empfangener Sensorsignale, die Signalstärke optimiert werden, wobei dann die optimierte Ausgabegröße an der Anzeigeeinheit angezeigt wird.

Besonders vorteilhaft wird in der Auswerteeinheit eine Bereichseinteilung der Ausgabegröße durchgeführt. Mit der Anzeigeeinheit wird angezeigt, in welchem Bereich die Ausgabegröße liegt.

Dabei kann ein erster Bereich einen fehlerfreien Zustand und ein zweiter Bereich einen kritischen Zustand kennzeichnen.

Durch die Visualisierung weniger, vorteilhaft nur zweier Bereiche für die Ausgabegröße kann ein Benutzer besonders schnell erkennen, ob der Sensor noch fehlerfrei arbeitet, d.h. ob eine hinreichend hohe Zuverlässigkeit bei durchzuführenden Objektdetektionen gegeben ist.

Gemäß einer besonders vorteilhaften Ausführungsform ist die Anzeigeeinheit von einer Leuchtdiodenanordnung gebildet.

Dabei weist die Leuchtdiodenanordnung Leuchtdioden auf, die Licht mit unterschiedlichen Farben aussenden.

Die so ausgebildete Anzeigeeinheit weist einen einfachen Aufbau auf. Durch die Aktivierung einzelner oder mehrerer Leuchtdioden, die Licht mit unterschiedlichen Farben emittieren, können unterschiedliche Zustände einer oder mehrerer Ausgabegrößen angezeigt werden.

Besonders vorteilhaft werden durch unterschiedliche Betriebszustände der Leuchtdioden der Leuchtdiodenanordnung unterschiedliche Ausgabegrößen oder Bereiche von Ausgabegrößen angezeigt.

Durch eine Bereichseinteilung des Werbebereichs der Ausgabegröße in wenige, vorteilhafte nur zwei Bereiche, werden entsprechend wenige Informationen erhalten, die mit der Anzeigeeinheit angezeigt werden müssen.

Die Anzeigeeinheit in Form der Leuchtdiodenanordnung ist daran optimal angepasst, da mit wenigen, vorzugsweise nur zwei Licht unterschiedlicher Farben emittierenden Leuchtdioden angezeigt werden kann, in welchem Bereich sich die Ausgabegröße befindet.

Hierzu werden die unterschiedlichen Betriebszustände der Leuchtdiode (Leuchtdiode ausgeschaltet, Leuchtdiode emittiert Dauerlicht, Leuchtdiode wird im Blinkbetrieb betrieben) als unterschiedliche Anzeigen genutzt.

Gemäß einer vorteilhaften Weiterbildung wird durch definierte Betriebszustände der Leuchtdioden angezeigt, ob der Testmodus aktiviert ist und/oder ob innerhalb des Testmodus ein Test durchgeführt wird oder nicht.

Durch die Anzeige, ob der Testmodus aktiviert ist, kann ein Benutzer den aktuellen Status des Sensors erkennen.

Wird ein Testmodus im Sensor gestartet, befindet sich jedoch im Detektionsbereich kein detektierbares Objekt, kann die Funktionsprüfung des Sensors nicht durchgeführt werden, was ebenfalls einem Benutzer mit der Anzeigeeinheit angezeigt wird.

Die Auslösung des Testmodus erfolgt vorteilhaft ereignisgesteuert.

Gemäß einer ersten Ausgestaltung weist der Sensor hierzu ein Bedienelement auf, durch dessen Betätigung der Testmodus aktiviert wird.

Alternativ oder zusätzlich weist der Sensor eine Schnittstelle auf, wobei durch ein über die Schnittstelle eingelesenes Steuersignal der Testmodus aktiviert ist.

Dann erfolgt das Auslösen des Testmodus durch eine externe Einheit wie z.B. eine Steuerung, die das Steuersignal in den Sensor eingibt.

Zweckmäßig hierzu wird der Testmodus mittels des Bedienelements oder eines Steuersignals beendet.

In diesem Fall wird der Testmodus ereignisgesteuert beendet.

Alternativ ist der Testmodus nur für einen vorgegebenen Zeitraum aktiviert.

In diesem Fall erfolgt das Beenden des Testmodus zeitgesteuert.

Der erfindungsgemäß Sensor kann als Radar- oder Ultraschallsensor ausgebildet sein.

Besonders vorteilhaft ist der Sensor ein optischer Sensor.

Der optische Sensor kann beispielsweise als Lichttaster oder Distanzsensor ausgebildet sein, wobei in beiden Fällen der optische Sensor einen Lichtstrahlen emittierenden Sender und einen Lichtstrahlen empfangenden Empfänger aufweist, die mit der Auswerteeinheit gemeinsam in einem Gehäuse integriert sind. Bei einem optischen Sensor in Form eines Distanzsensors können Distanzmessungen mittels eines Impuls-Laufzeitverfahrens, eines Phasenmessverfahrens oder einer Triangulationsverfahrens durchgeführt werden.

Mit derartigen optischen Sensoren können Objektfeststellungssignale in Form binärer Schaltsignale generiert werden, deren Schaltzustände angeben, ob ein Objekt in einem bestimmten Distanzbereich vorhanden ist oder nicht. Für den Fall, dass der optische Sensor ein Distanzsensor ist, können auch Distanzwerte oder Objektfeststellungssignale generiert werden.

Der optische Sensor kann auch ein Lichtvorhang sein, der eine Sendereinheit mit Lichtstrahlen emittierenden Sendern an einem Rand eines Detektionsbereichs und eine Empfängereinheit mit einer Anordnung von Lichtstrahlen empfangenden Empfängern am gegenüberliegenden Rand des Detektionsbereichs aufweist. Bei freiem Detektionsbereich treffen die Lichtstrahlen jedes Senders auf einen zugeordneten Empfänger. Bei einem Objekteingriff im Detektionsbereich wird der Strahlengang wenigstens einer der Lichtstrahlen unterbrochen. Der Lichtvorhang kann auch als Reflex-Lichtvorhang ausgebildet sein. Dann sind alle Sender und Empfänger in einem Gehäuse an einem Rand des Detektionsbereichs angeordnet. Am gegenüberliegenden Rand des Detektionsbereichs ist ein Reflektor angeordnet. Bei freiem Detektionsbereich werden die Lichtstrahlen jedes Senders auf den Reflektor geführt und von dort zurück zu dem jeweils zugeordneten Empfänger geführt. Für den Fall, dass dieser optische Sensor nur einen Sender und einen Empfänger aufweist, bildet dieser eine Lichtschranke.

Der optische Sensor kann auch als Flächendistanzsensor, d.h. als scannender Distanzsensor ausgebildet sein. Vorteilhaft erfolgen die Distanzmessungen nach einem Impulslaufzeitverfahren. Der Distanzsensor kann in einem rotierenden Messkopf untergebracht sein. Durch die Drehbewegung des Messkopfs werden vom Distanzsensor emittierte Lichtstrahlen periodisch innerhalb eines flächigen Detektionsbereich geführt. Alternativ kann der Distanzsensor stationär in einem Gehäuse angeordnet sein. Dann werden die Lichtstrahlen des Distanzsensors mittels einer Ablenkeinheit periodisch innerhalb des Detektionsbereichs geführt.

Schließlich kann der optische Sensor als Kamerasensor ausgebildet sein.

Gemäß einer vorteilhaften Ausführungsform ist der Sensor ein Sicherheitssensor.

Für den Einsatz im Bereich der Sicherheitstechnik weist der Sicherheitssensor einen fehlersicheren Aufbau auf. Dies kann durch einen redundaten Aufbau der Auswerteeinheit, beispielsweise in Form zweier sich gegenseitig zyklisch überwachender Rechnereinheiten, erzielt werden.

Die Erfindung wird im Folgenden anhand der Zeichnungen erläutert. Es zeigen:
- Figur 1:: Ausführungsbeispiel des erfindungsgemäßen Sensors.
- Figur 2:: Darstellung der Anzeigeeinheit des Sensors gemäß Figur 1 in einer Draufsicht.
- Figur 3:: Diagramm mit dem zeitlichen Verlauf einer Signalstärke für den Sensor gemäß Figur 1.

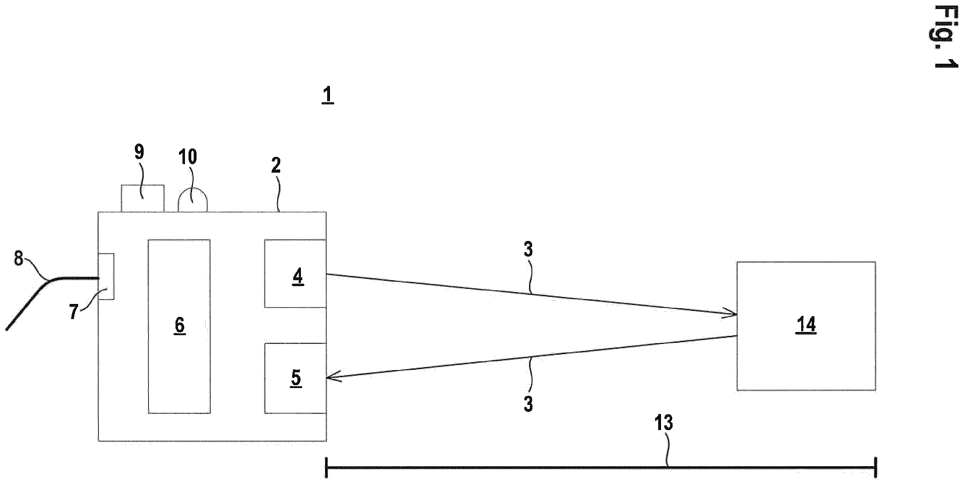

Figur 1 zeigt ein Ausführungsbeispiel des erfindungsgemäßen Sensors. Der Sensor kann prinzipiell als Radar- oder Ultraschallsensor ausgebildet sein.

Im vorliegenden Fall ist der Sensor als optischer Sensor 1 ausgebildet.

Der optische Sensor 1 weist ein Gehäuse 2 auf, in welchem als Sensorkomponenten ein Lichtstrahlen 3 emittierender Sender 4 und ein Lichtstrahlen 3 empfangenden Empfänger 5 integriert sind. Zudem ist im Gehäuse 2 eine Auswerteeinheit 6 integriert, die allgemein von einer Rechnereinheit gebildet ist.

Weiterhin weist der optische Sensor 1 eine Schnittstelle 7 auf, die über eine Leitung 8 mit einer externen Einheit, wie einer Steuerung, verbunden sein kann. Die Schnittstelle 7 kann als IO-Link-Schnittstelle ausgebildet sein.

An der Außenseite des Gehäuses 2 befindet sich ein Bedienelement 9 in Form einer Teach-Taste. Zudem ist dort eine Anzeigeeinheit 10 vorgesehen.

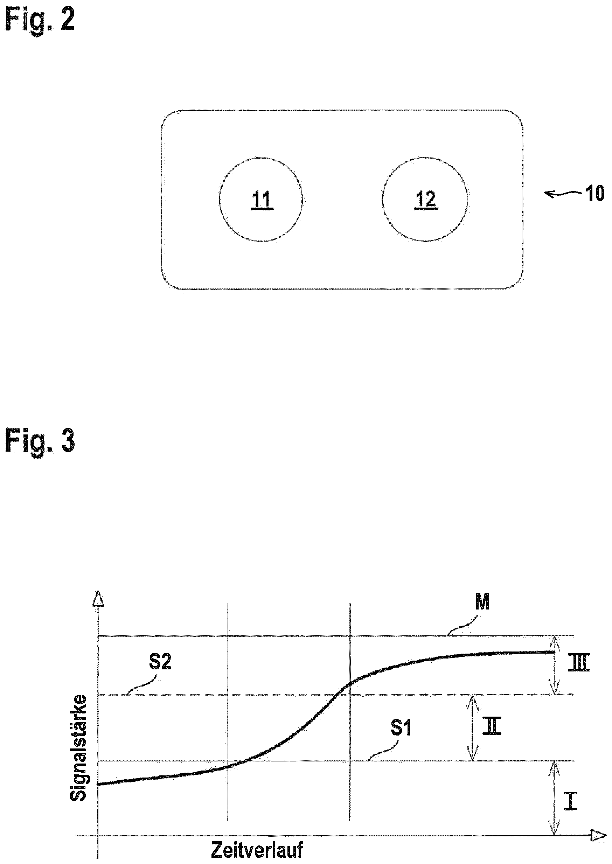

Die Anzeigeeinheit 10 ist, wie in der Figur 2 dargestellt, in Form einer Leuchtdiodenanordnung mit zwei Leuchtdioden 11, 12 ausgebildet. Sind die Leuchtdioden 11, 12 aktiviert, senden diese Licht im sichtbaren Wellenlängenbereich aus, wobei die Leuchtdioden 11, 12 Licht in unterschiedlichen Farben emittieren. Im vorliegenden Fall emittiert die erste Leuchtdiode 11 gelbes Licht, die zweite Leuchtdiode 12 grünes Licht. Die Auswerteeinheit 6 steuert den Sender 4, die Schnittstelle 7 und die Anzeigeeinheit 10. Mit dem Bedienelement 9 werden Eingangssignale generiert, die der Auswerteeinheit 6 zugeführt werden. Zudem weist die Auswerteeinheit 6 eine Signalverarbeitung auf, mit der Empfangssignale des Empfängers 5 ausgewertet werden.

Mit dem optischen Sensor 1 erfolgt eine Objektdetektion innerhalb eines Detektionsbereichs 13, der durch die maximale Betriebsreichweite des optischen Sensors 1 definiert ist.

In einem Arbeitsmodus des optischen Sensors 1 emittiert der Sender 4 Lichtstrahlen 3 in den Detektionsbereich 13, die von einem dort vorhandenen Objekt 14 zum Empfänger 5 zurückreflektiert werden. Abhängig von den Empfangssignalen des Empfängers 5 generiert der optische Sensor 1 ein Objektfeststellungssignal, das über einen nicht dargestellten Ausgang ausgegeben wird.

Der optische Sensor 1 kann als Lichttaster ausgebildet sein. Dann erfolgt im optischen Sensor 1 eine Amplitudenbewertung der Empfangssignale. Abhängig hiervon wird als Objektfeststellungssignal ein binäres Schaltsignal generiert, dessen Schaltzustände angeben, ob ein Objekt 14 im Detektionsbereich 13 vorhanden ist oder nicht.

Im vorliegenden Fall ist der optische Sensor 1 ein Distanzsensor. Die Distanzmessungen erfolgen vorteilhaft nach einem Impuls-Laufzeit-Verfahren oder nach einem Phasenmessverfahren. Als Objektfeststellungssignal können Distanzwerte ausgegeben werden. Alternativ kann als Objektfeststellungssignal ein binäres Schaltsignal generiert werden, dessen Schaltzustände angeben, ob sich ein Objekt 14 in einem bestimmten Distanzbereich befindet oder nicht.

Erfindungsgemäß kann der optische Sensor 1 oder allgemein der Sensor in einen Testmodus versetzt werden, im vorliegenden Fall durch Betätigen des Bedienelement 9 oder durch Einlesen eines Steuersignals über die Schnittstelle 7.

Der Testmodus kann auf dieselbe Weise beendet werden. Alternativ bleibt der Testmodus nur für eine vorgegebene Zeitdauer aktiv.

Im Testmodus wird im Detektionsbereich 13 ein Objekt 14 mit vorteilhaft definierten, in der Auswerteeinheit 6 bekannten Objekteigenschaften platziert und mit dem optischen Sensor 1 detektiert.

Abhängig von der Detektion dieses Objekts 14 werden Parameter des optischen Sensors 1 überprüft und vorteilhaft variiert, um die Funktionssicherheit des optischen Sensors 1 zu verbessern. Vorteilhaft wird die Ausgabegröße durch Variation der Parameter optimiert.

Die zu variierenden Parameter können von der Intensität und/oder einer Modulationsfrequenz der vom Sender 4 emittierten Lichtstrahlen 3 gebildet sein. Ein weiterer Parameter ist die Verstärkung der Empfangssignale des Empfängers 5. Auch Parameter der Auswerteeinheit 6, die für die Auswertung der Empfangssignale relevant sind, können überprüft und variiert werden.

Die Parametervariation erfolgt um eine bestimmte Ausgabegröße zu optimieren.

Beispielsweise ist die Ausgabegröße vom Signal-Rausch-Verhältnis empfangsseitiger Sensorsignale gebildet.

Weiterhin kann die Ausgabegröße von einer Reaktionszeit der Generierung des Objektfeststellungssignals gebildet sein.

Im vorliegenden Fall ist die Ausgabegröße von der Signalstärke empfangsseitiger Sensorsignale gebildet.

Figur 3 zeigt den zeitlichen Verlauf der Signalstärke, d.h. der Amplitude des Empfangssignals, das bei Detektion des Objekts 14 im Detektionsbereich 13 erhalten wird. Durch die Parametervariation wird die Signalstärke bis zu einem Maximalwert erhöht, wie Figur 3 zeigt.

Der Wertebereich der Signalstärke wird durch eine Schwellwertbewertung der Signalstärke in drei Bereich I, II, III unterteilt. Der Schwellwert S1 definiert den minimalen Wert der Signalstärke, der für die Erkennung des Objekts 14 nötig ist. Der Schwellwert S2 definiert ein Kriterium für eine sichere Erkennung des Objekts 14. Weiterhin ist in Figur 3 mit M der theoretische Maximalwert der Signalstärke bezeichnet.

Demzufolge ist im Bereich I keine Objektdetektion möglich. Im Bereich II ist eine Objektdetektion möglich.

Mit der Anzeigeeinheit 10 wird angezeigt, in welchem der Bereiche I, II, III sich die Signalstärke nach durchgeführter Optimierung befindet.

Die unterschiedlichen Bereiche werden durch unterschiedliche Betriebszustände der Leuchtdioden 11, 12 (ausgeschaltet, blinkend, Dauerlichtbetrieb) angezeigt, wobei für die Anzeige der unterschiedlichen Bereiche die Leuchtdioden 11, 12 in unterschiedlichen Betriebszuständen betrieben sind, so dass ein Benutzer die Bereiche sofort unterscheiden und so den Status der Funktionssicherheit des optischen Sensors 1 ablesen kann.

Auch der Wechsel vom Arbeitsmodus in den Testmodus wird mit den Leuchtdioden 11, 12 angezeigt. Schließlich kann der Benutzer mit den Leuchtdioden 11, 12 angezeigt werden, wenn im Testmodus keine Funktionsüberprüfung möglich ist, weil kein Objekt 14 im Detektionsbereich 13 vorhanden ist. Auch für diese Anzeigen werden die Leuchtdioden 11, 12 in eindeutig identifizierbare Betriebszustände versetzt.

### Bezugszeichenliste

- (1): optischer Sensor
- (2): Gehäuse
- (3): Lichtstrahl
- (4): Sender
- (5): Empfänger
- (6): Auswerteeinheit
- (7): Schnittstelle
- (8): Leitung
- (9): Bedienelement
- (10): Anzeigeeinheit
- (11): Leuchtdiode
- (12): Leuchtdiode
- (13): Detektionsbereich
- (14): Objekt

## Patentansprüche

1. Sensor zur Detektion von Objekten (14) in einem Detektionsbereich (13), mit Sensorkomponenten und einer Auswerteeinheit (6), wobei in einem Arbeitsmodus mittels der Sensorkomponenten generierte Sensorsignale in der Auswerteeinheit (6) ausgewertet werden und abhängig von der Auswertung ein Objektfeststellungssignal generiert wird, **dadurch gekennzeichnet, dass** der Sensor in einen Testmodus versetzbar ist, dass im Testmodus ein im Detektionsbereich (13) platziertes Objekt (14) detektiert wird, dass in der Auswerteeinheit (6) abhängig von der Detektion dieses Objekts (14) Parameter von Sensorkomponenten und/oder der Auswerteeinheit (6) überprüft und/oder variiert werden und abhängig hiervon eine Ausgabegröße generiert wird, die mittels einer Anzeigeeinheit (10) angezeigt wird.

2. Sensor nach Anspruch 1, **dadurch gekennzeichnet, dass** die Ausgabegröße durch Variation der Parameter optimiert wird.

3. Sensor nach Anspruch 2, **dadurch gekennzeichnet, dass** die Optimierung der Ausgangsgröße mittels eines in der Auswerteeinheit (6) implementierten Regelalgorithmus erfolgt.

4. Sensor nach einem der Ansprüche 1 bis 3, **dadurch gekennzeichnet, dass** die zu variierenden Parameter von der Intensität emittierter Strahlung, einer Modulationsfrequenz emittierter Strahlung, einer Verstärkung empfangsseitig registrierter Sensorsignale, einer Auswerterate der Auswertung empfangsseitig registrierter Sensorsignale und/oder einer Signalverarbeitung empfangsseitig registrierter Sensorsignale gebildet sind.

5. Sensor nach einem der Ansprüche 1 bis 4, **dadurch gekennzeichnet, dass** die Ausgabegröße von der Signalstärke empfangsseitiger Sensorsignale oder vom Signal-Rausch-Verhältnis empfangsseitiger Sensorsignale oder von einer Reaktionszeit der Generierung des Objektfeststellungssignals gebildet ist.

6. Sensor nach einem der Ansprüche 1 bis 5, **dadurch gekennzeichnet, dass** in der Auswerteeinheit (6) eine Bereichseinteilung der Ausgabegröße durchgeführt wird, und dass mit der Anzeigeeinheit (10) angezeigt wird, in welchem Bereich die Ausgabegröße liegt.

7. Sensor nach Anspruch 6, **dadurch gekennzeichnet, dass** ein erster Bereich einen fehlerfreien Zustand und ein zweiter Bereich einen kritischen Zustand kennzeichnet.

8. Sensor nach einem der Ansprüche 1 bis 7, **dadurch gekennzeichnet, dass** dieser ein Bedienelement (9) aufweist, durch dessen Betätigung der Testmodus aktiviert wird, und/oder dass der Sensor eine Schnittstelle (7) aufweist, wobei durch ein über die Schnittstelle (7) eingelesenes Steuersignal der Testmodus aktiviert ist.

9. Sensor nach Anspruch 8, **dadurch gekennzeichnet, dass** der Testmodus mittels des Bedienelements (9) oder eines Steuersignals beendet wird, und/oder dass der Testmodus nur für einen vorgegebenen Zeitraum aktiviert ist.

10. Sensor nach einem der Ansprüche 1 bis 9, **dadurch gekennzeichnet, dass** das Objekt (14) definierte, im Sensor bekannte Objekteigenschaften aufweist.

11. Sensor nach einem der Ansprüche 1 bis 10, **dadurch gekennzeichnet, dass** die Anzeigeeinheit (10) von einer Leuchtdiodenanordnung gebildet ist, wobei die Leuchtdiodenanordnung Leuchtdioden (11, 12) aufweist, die einfarbiges Licht aussenden oder die Licht mit unterschiedlichen Farben aussenden.

12. Sensor nach Anspruch 11, **dadurch gekennzeichnet, dass** durch unterschiedliche Betriebszustände der Leuchtdioden (11, 12) der Leuchtdiodenanordnung unterschiedliche Ausgabegrößen oder Bereiche von Ausgabegrößen angezeigt werden, und/oder dass durch definierte Betriebszustände der Leuchtdioden (11, 12) angezeigt wird, ob der Testmodus aktiviert ist und/oder ob innerhalb des Testmodus ein Test durchgeführt wird oder nicht.

13. Sensor nach einem der Ansprüche 1 bis 12, **dadurch gekennzeichnet, dass** dieser ein optischer Sensor, ein Radarsensor oder ein Ultraschallsensor ist.

14. Sensor nach Anspruch 13, **dadurch gekennzeichnet, dass** dieser ein Distanzsensor oder ein Flächendistanzsensor oder ein Lichttaster, eine Lichtschranke oder eine Reflexions-Lichtschranke oder ein Lichtvorhang oder ein Reflexions-Lichtvorhang ist.

15. Sensor nach einem der Ansprüche 1 bis 14, **dadurch gekennzeichnet, dass** dieser ein Sicherheitssensor ist.
